# EUROPEAN PATENT APPLICATION

(11) **EP 0 630 582 A1**
(43) Date of publication of application: **28.12.1994**
(21) Application number: 94109565.5
(22) Date of filing: 03.05.1990
(51) Int. Cl.: A23L 1/317, A23L 1/315

(54) **Food product, and method of manufacturing a food product**

(30) Priority: 03.05.1989 GB 8910064
(62) Divisional of application: 90304833.8
(71) Applicant: SUN VALLEY POULTRY LIMITED, Hereford, Worchestershire HR4 9PB (GB)
(72) Inventor: Clarke, Edward Thomas, Herefordshire HR1 3BT (GB); Jull, Harvey William, Bodenham Herefordshire HR1 3HT (GB)
(74) Representative: Lally, William

(57) **Abstract**

The invention is concerned with a food product, and a method of manufacture of the food product. The product is a meat pattie comprising a filling in the form of a sauce for the meat which will be released when the pattie has been cooked. The product comprises a base [6] and a cover [8], generally flat and conveniently of circular-type shape muscle meat, having been subjected to a tumbling operation in brine to bring myacin of the meat to the surface. The base [6] is placed on a flat surface, and a slug of a filling material is placed centrally on the base, and a cover [conveniently provided with a decorative embellishment, such as a lattice of puff pastry] is placed over the base, and crimped onto the base.

Preferably the product is subjected to a superficial cooking operation, cooking the product to a depth of less than 2 mm, prior to chilling, and packaging for sale.

## Description

This invention is concerned with improvements relating to food products, and to methods of manufacture of food products. The invention has been devised primarily in relation to the production of a meat-based product, and in particular to a product based on the muscle meat of poultry. It is however to be appreciated that the invention may be utilised for meat in general terms, including fish, and particularly may be utilised in relation to synthetic meat products based on vegetable protein, such as soya.

According to this invention there is provided a food product comprising a base of meat, a cover of meat, and a filling between the base and cover, the product having been subjected to a superficial cooking operation.

By the provision of the superficial cooking operation, the product is provided with a superficial enclosed texture, without incurring the disadvantages of providing the product fully cooked.

Preferably the product is cooked to a depth of no more than 5 mm, preferably less than 2 mm, and advantageously utilises an operation which does not involve adding fat to the product.

Advantageously the cover is provided with an embellishment of pastry, conveniently in the form of an open-work lattice of pastry strips.

The superficial cooking operation not only adheres the cover to the base, but also partially cooks the embellishment, and causes the embellishment to adhere to the cover.

According to this invention there is also provided a method of manufacturing a food product involving the steps:
[a] providing two meat patties;
[b] treating the patties to bring myacin to the surface, such as by tumbling;
[c] sandwiching between the patties a filling;
[d] crimping the patties together around their edge regions; and
[e] subjecting the patties to a superficial cooking operation.

Preferably the method also comprises the step of chilling [but preferably not freezing] the product, and packaging the product.

Preferably the step [e] is carried out in the absence of additional fat, and advantageously involves subjecting the product to hot, preferably saturated air, preferably at a temperature of between 50°C and 80° for a period of between 2 and 5 minutes.

Advantageously the method involves the provision of an embellishment of pastry to the cover prior to the step [e].

There will now be given a detailed description, to be read with reference to the accompanying drawings, of a food product, and a method of manufacture of the food product which have been selected for the purposes of illustrating the invention by way of example.

In the accompanying drawings:

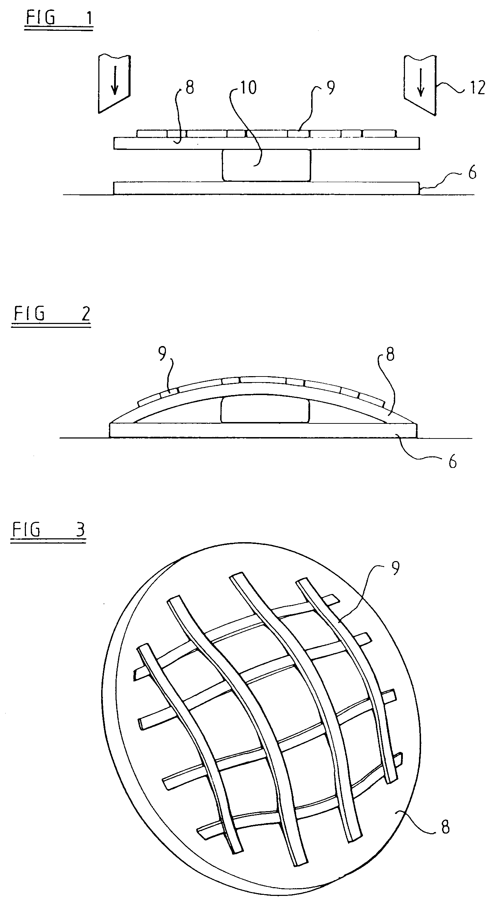

FIGURE 1 is a schematic side elevational view showing the product during the course of its manufacture;
FIGURE 2 is a schematic vertical sectional view through the product; and
FIGURE 3 is a perspective view of the product.

The food product which is the preferred embodiment of this invention is a meat pattie comprising a filling in the form of a sauce for the meat which will be released when the pattie has been cooked.

The product comprises a base 6 and a cover 8, generally flat, and conveniently of circular-type shape [including ovoid] of meat muscle, having been subjected to a tumbling operation in brine to bring myacin of the meat to the surface. The base 6 is placed on a flat surface, and a billet or slug 10 of a filling material is placed generally centrally on the base, the billet 10 being conveniently frozen and of shape-retaining form whilst retained cold. The filling may be of any convenient material, but it is particularly envisaged that the billet may be of a material which, when the product is cooked, is released to form a sauce for the meat, and may conveniently afford a cheese sauce.

The cover 8 is provided with a decorative embellishment conveniently in the form of a lattice 9 of puff pastry.

The cover 8 is then crimped to the base 6, conveniently by a crimping tool 12 which is designed to exert radial inward pressure on the cover 8, to avoid the formation of a thick outer flange. The product is thus produced into a dome-shape.

The myacin which has been brought to the surface of the patties by the tumbling operation is effective to adhere the base and cover together, and the product is then fed through a heating oven at which it is subjected to heated and humidified air sufficient to cook the product superficially only, e.g. to a depth of less than 5 mm, preferably less than 2 mm. In this manner, the superficial protein of the product is "set" both to retain the base and cover secured together, and to present an "enclosed" texture to the product, this being accomplished without any significant rise in temperature to the filling 10 as would cause the filling to melt.

For example, the product may be subjected to the superficial cooking operation in the absence of additional fat by subjecting the product to heating by super-saturated air at a temperature of between 80°C and 90°C [wet bulb] and 90°C and 110°C [dry bulb].

In addition to providing the superficial cooking of the meat, the cooking also partly cooks the lattice pastry work 9 provided on the cover, causing the pastry work to "puff-up", and to adhere to the cover 8, to provide a product having considerable visual attraction.

The product may be chilled, and packaged for sale.

The features disclosed in the foregoing description, or the following claims, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. A food product comprising a base (6) of meat, a cover (8) of meat, and a filling (10) between the base and cover, characterised in that the base and cover are initially generally flat of circular-type shape and have a high surface myacin content, the base and cover being secured together around a peripheral line utilising the surface myacin as an adhesive, the product having been subjected to a superficial cooking operation.

2. A food product according to Claim 1 being dome-shaped.

3. A food product according to one of Claims 1 and 2 comprising a decorative embellishment of pastry on the cover.

4. A food product according to Claim 3 wherein the pastry is in the form of a lattice.

5. A food product according to one of Claims 3 and 4 wherein the embellishment is of puff pastry.

6. A food product according to any one of the preceding claims, in which the cooking operation has not added any additional fat to the product.

7. A method of manufacturing a food product of the kind comprising a base (6) of meat, a cover (8) of meat, and a filling (10) between the base and cover, involving the steps:
a) providing two generally flat patties having a high surface myacin level;
b) placing the base on a flat surface;
c) placing the filling material on the base;
d) placing the cover over the filling on the base;
e) securing the cover and base together around the periphery thereof by pressure utilising the surface myacin as an adhesive;
f) subjecting the food product to a superficial cooking operation so that the superficial protein of the product is "set" to retain the base and cover secured together.

8. A method according to Claim 7 involving the step of applying a decorative embellishment of pastry to the cover.

9. A method according to one of Claims 7 and 8 in which the filling is placed on the base whilst cold.

10. A method according to Claim 9 wherein the filling is placed on the base whilst frozen.

11. A method according to any one of Claims 7 to 10 in which the superficial cooking operation is carried out in the absence of fat.

12. A method according to Claim 11 in which the superficial cooking operation involves subjecting the product to hot preferably saturated air preferably at a temperature of between 50°C and 80°C for a period of between two and five minutes.
